# EUROPEAN PATENT SPECIFICATION

(11) **EP 1 711 733 B1**
(45) Date of publication and mention of the grant of the patent: **01.09.2010**
(21) Application number: 05702721.1
(22) Date of filing: 19.01.2005
(51) Int. Cl.: F16L 33/207

(54) **COMPRESSION CLAMP**
DRUCKKLEMME
COLLIER DE COMPRESSION

(30) Priority: 23.01.2004 US 763711; 18.08.2004 US 921536
(43) Date of publication of application: 18.10.2006
(73) Proprietor: Trans-Matic MFG. Co., Incorporated, Holland MI 49423 (US)
(72) Inventor: POLL, Steven Allen, Zeeland, MI 49464 (US); BROWN, Edward Allen, Jr., Holland, MI 49424 (US)
(74) Representative: Copsey, Timothy Graham
(86) International application number: PCT/IB2005/050222
(87) International publication number: WO 2005/071300

(56) References cited:
- DE-A1- 3 003 368
- GB-A- 2 049 856
- US-A- 4 315 348
- US-A- 4 948 178
- US-B1- 6 240 603

## Description

### BACKGROUND OF THE INVENTION

The present invention is related to compression clamps, and more particularly to compression clamps used in pipe connections.

Compression clamps are well known for connecting a section of pipe or tubing to a fitting. The current method is a metal band that is positioned and crimped onto the end of a pipe or tube to secure the tube to a fitting. The pipe may be plastic, such as polyethelyne cross linked (PEX), or another suitable material. The clamp is crimped using a specially deigned tool. These clamps may be used in a wide variety of applications including recreational vehicles, manufactured homes, marine crafts, stick built homes, and beverage dispensing machines.

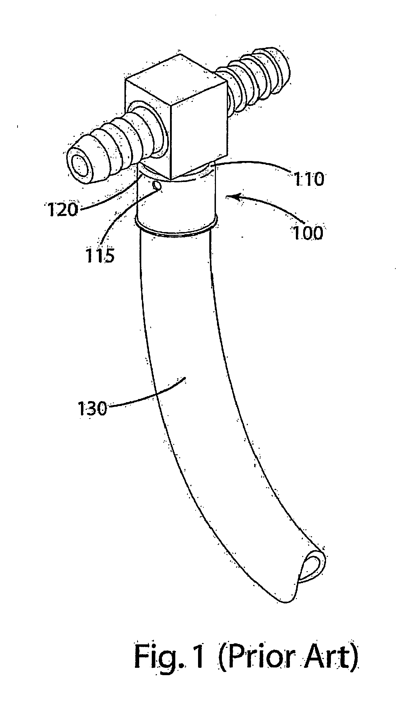

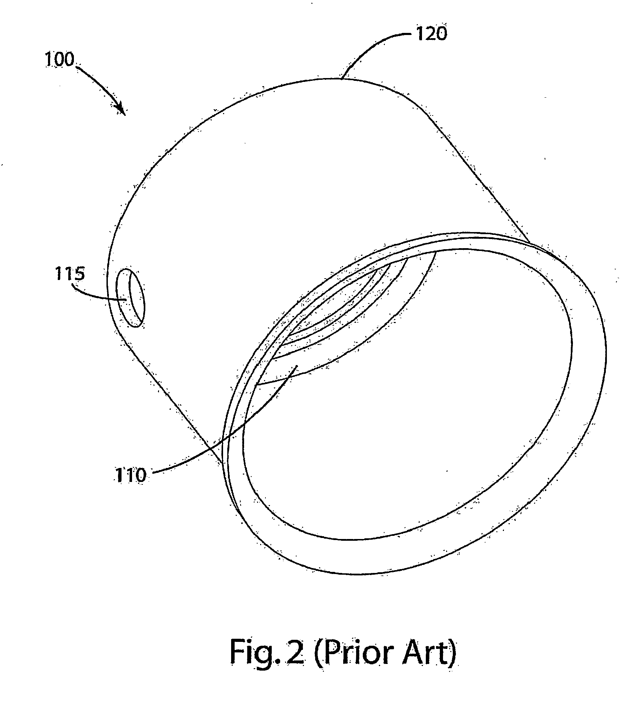

The proper positioning of the compression clamps on the pipe ends is important. Accordingly, the present clamps are designed to enhance the likelihood that the clamp willie properly positioned. One such clamp is sold by Stadler-Viega of Bedford, Massachusetts under the Pureflow trademark. As illustrated in Figs. 1 and 2, this clamp 100 includes a shoulder 110 at one end 120 to provide a positive stop for the pipe 130 within the clamp. The clamp also defines a "witness window" 115 to permit visual observation and confirmation that the pipe improperly positioned within the clamp end against the flange 110. The flange 110 assists in properly positioning the clamp on the tube end.

Unfortunately, there are difficulties in the installation of conventional compression clamps. After a clamp is placed on the end of the pipe, it must be physically held in place until the fitting is inserted into the pipe and the clamp is compressed, which requires two hands. If this is not done, the clamp may fall off the tube or become incorrectly orientated on the tube and the fitting may slide out of the tube. This problem is exacerbated when the installation of a clamp is attempted in a tight space, because the user may only be able to reach the pipe and the clamp with one hand, leaving one or no hands to make the connection with the install tool.

Another difficultly is that conventional connectors like those shown in Figs. 1 and 2 require specially designed tools that surround the entire connector. This necessitates carrying a number of differently sized crimping tools to accommodate different paper sizes. In order to reduce the need for multiple crimping tools, some manufacturers supply the connector with a crimping ear, for example, a U shaped section extending outwardly from the connector that can be crimped with a conventional crimping tool. A single tool can crimp the ears of many different size pipes. However, especially under pressure and certain environmental conditions these connectors have a tendency to leak in the area of the crimped ear.

GB2049856 discloses a locking device for locking a resilient tube to a nipple provided with at least one flange. The locking device comprises a sleeve which is separate from the nipple and which can be threaded over the flange of the nipple and maybe actuated to a longitudinally displaced position on application thereby preventive the separation of the tube and the nipple. US6240603 discloses a hose clamp with stepless internal clamping surface and a method of making the same.

US4315348 discloses a clamp with deformable ear and an inner part which is adapted to engage with the outer part to assure a substantially smooth, gap-free transition in the circumferential direction when the ear is contracted.

In the present invention a compression clamp is provided with an integral crimping ear and an integral tongue inside the clamp under the mouth of the ear.

The tongue is located between the ear and the pipe, overlaying the mouth of the ear. The tongue reduces the likelihood of leakage by providing compression around the entire circumference of the pipe by bridging the mouth of the ear.

The tongue is connected to the ear by a strap including a score line that allows the strap to flex outwardly when the ear is crimped. The flexed strap provides an accessible location to cut the strap to remove the tongue and ultimately to remove the connector if necessary, for repairs of replacement.

These and other objects, advantages, and features of the invention will be readily understood and appreciated by references to the detailed description of the current embodiments and the drawings.

### Brief Description of the Drawings

Fig. 1 is a perspective view of a prior art clamp in combination with a pipe and a fitting.
Fig. 2 is a perspective view of the prior art clamp.
Fig. 3 is a perspective view of a clamp not in accordance with the present invention but showing a clamp in combination with a pipe and a fitting.
Fig. 4 is a perspective view of the clamp.
Fig. 5 is a sectional view taken along line 3-3 in Fig 4.
Fig. 6 is a sectional view taken along line 6-6 in Fig. 3.
Fig. 7 is a perspective exploded view of Fig 3.
Fig. 8 is a top perspective view of an embodiment of the clamp according to the invention.
Fig. 9 is a bottom perspective view of the embodiment show in Figure 8.
Fig. 10 is a perspective exploded view of the embodiment of Figure 8 in combination with a pipe and a fitting.
Fig. 11 is a front sectional view of the embodiment of Figure 8.
Fig. 12 is a side sectional view of the embodiment of Figure 8.
Fig. 13 is a top sectional view of the embodiment of Figure 8 in combination with a pipe.
Fig. 14 is a top sectional view of the embodiment of Figure 8 in combination with a pipe and a fitting; and
Fig. 15 is a perspective view of the embodiment of Figure 8 in combination with a pipe with the strap in a deformed position.

### Detailed Description of the Current Embodiments

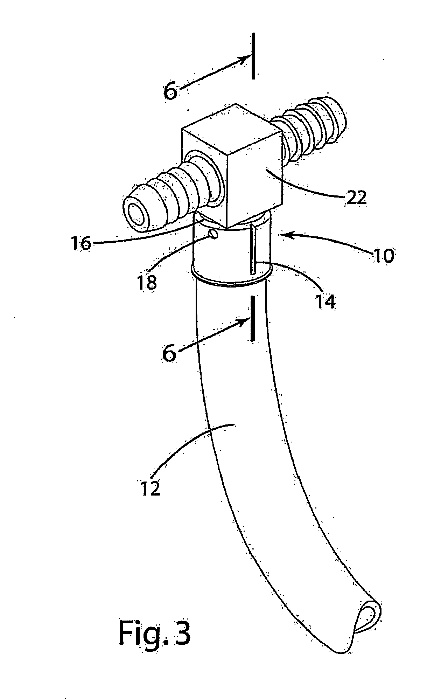

A compression clamp is shown in Fig. 3 and generally designated 10. The clamp 10 is preferably a metal band that is clampable of slidably fitting over a pipe or tube 12. The clamp 10 preferably includes a plurality of spaced apart ribs 14, a positive stop flange 16, and a witness window 18. In operation, the clamp 10 is placed over the end of the pipe 12, and a fitting 22 is inserted into the clamp 10 at the same end of the pipe 12. The clamp 10 is then crimped with a crimping tool (not shown) to compress the clamp 10 about the pipe 12 and the fitting 22, securing the fitting 22 inside the pipe 12.

### I. Structure

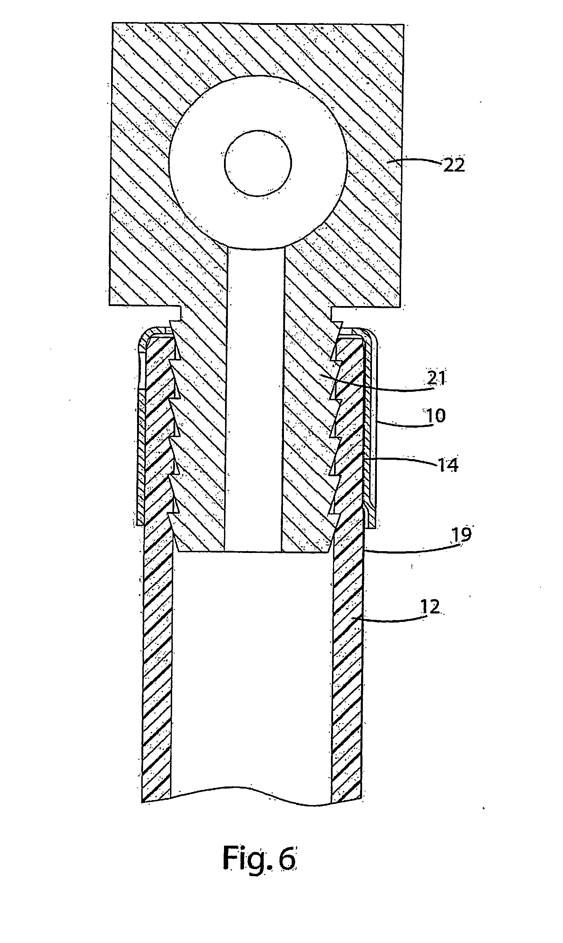

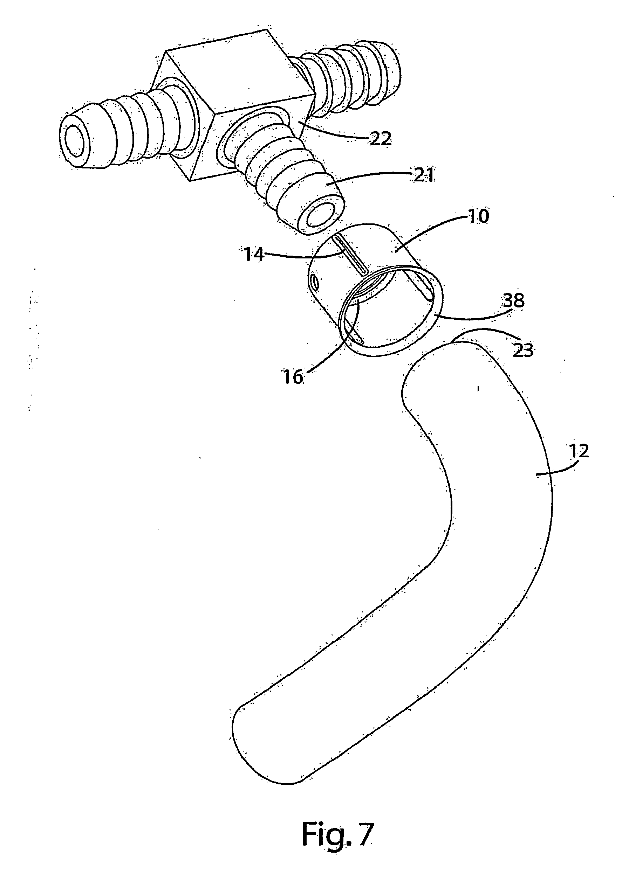

Shown in Figs. 6 and 7, the pipe 12 is well known and generally comprised of, but not limited to, plastic, such as PVC or PEX (cross linked polyethylene). The pipe includes an outer surface 19, and an end 23 that will receive the clamp 10. Depending on the desired application, the pipe may be a rigid or flexible, and may have a variety of standard sizes. The fitting 22 is also well known and is available in standard sizes. They are generally comprised of a metal, such as brass, or plastic, and include at least one insert 21 having a diameter slightly smaller than the inner diameter of the pipe 12 such that it can be inserted into the end 23 of the pipe 12. The T-shaped fitting 22 shown is intended to be exemplary of just one type of such pipe fittings.

As shown in Fig, 4, the clamp 10 is generally a metal band having a circumference of any desired size so that it fits over a desired pipe or tube. The clamp 10 includes a first end 24, a second end 26, and a side wall 28 extending between the first end 24 and second end 26. The width of the side wall between the first and second ends 24 and 26 may vary with the desired application. The side wall 28 also includes an inner surface 32, an outer surface 34. In the preferred embodiment, a lip 38 extends radially outward from the second end 26. The lip 38 includes a radius 40 that forms a smooth transition with the side wall 28.

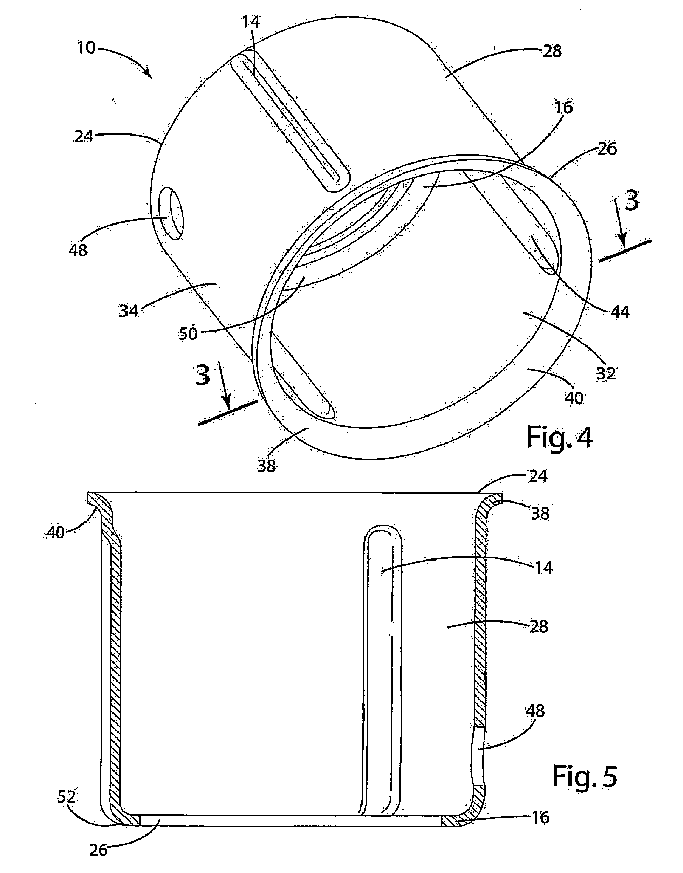

The side wall 28 also includes a plurality of inward deformations. As shown in Figs. 4 and 5, in the preferred embodiment, the inward deformations are a plurality of ribs 14. The ribs 14 preferably extend across the substantial width of the side wall 28, forming an indentation 42 in the outer surface 34 and a corresponding protrusion 44 on the inner surface 32. The depth of the protrusion 44 may vary depending on the desired interference between the ribs 14 and the pipe 12. In a preferred embodiment, three ribs 14 are spaced evenly about the sidewall 28. However, any number of rids 14 may be used, and the ribs 14 may have a different orientation, such as running circumferentially about the clamp 10. Alternatively, the inward deformation may be a number of dimples, or a differently shaped inward deformation that creates a friction fit between the clamp 10 and the pipe 12.

In one embodiment, a positive stop flange 16 extends radially inward from the first end 24 of the clamp 10. The flange 16 preferably extends around the entire circumference of the clamp 10, having an inner surface 50, and an outer surface 52. The depth of the flange 16 is approximately the same, but not greater than the thickness of the pipe 12, so that the fitting 22 may still be inserted through the clamp 10 and into the end of the pipe 12. In another embodiment, the side wall 28 includes a hole 48, or witness window. The hole 48 is proximate to the first end 24 of the clamp 10, allowing a user to view the pipe 12 through the window 48 when the clamp 10 is placed on the pipe 12.

### II. Operation

In operation, the second end 26 of the claim 10 is positioned proximate to the end 23 of the pipe 12. A user will then slide the clamp 10 onto the end 23 of the pipe 12. As the clamp 10 slides onto the pipe 12, the lip 38 on the second end 26 of the clamp 10 serves to guide the pipe 12 into the clamp 10 and then the ribs 14 engage the outer surface 19 of the pipe 12, creating a friction fit between the ribs 14 and the pipe 12 for crimping. The pipe 12 is slid onto the clamp 10 until the end 23 of the pipe 12 contacts the inner surface 50 of the flange 16, and the pipe 12 is visible through the window 48. The flange 16 prevents the clamp 10 from sliding farther onto the pipe 12, and the friction fit created by the ribs 14 prevents the clamp from sliding off the pipe 12 without a force being applied by the user. Once the clamp 10 is in place, the insert 12 of the fitting 22 is inserted into the end 23 of the pipe 12, and the clamp 10 is crimped with a crimping tool to compress the clamp 10 onto the pipe 12, and compress the pipe 12 onto the fitting 22.

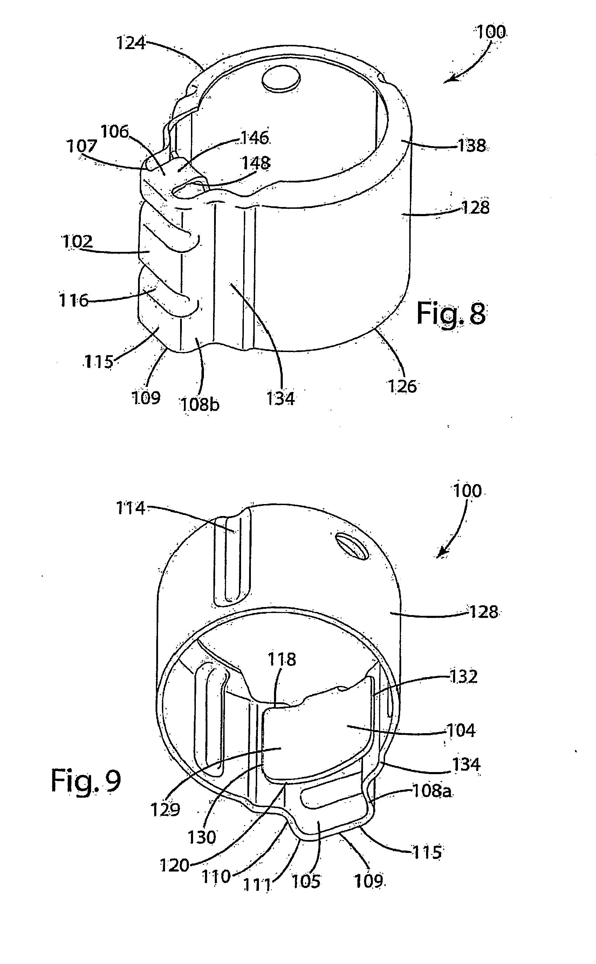

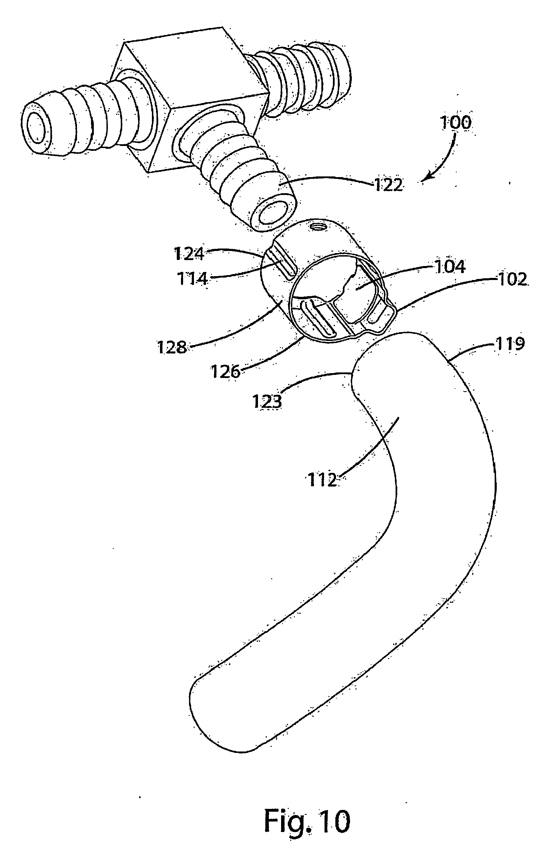

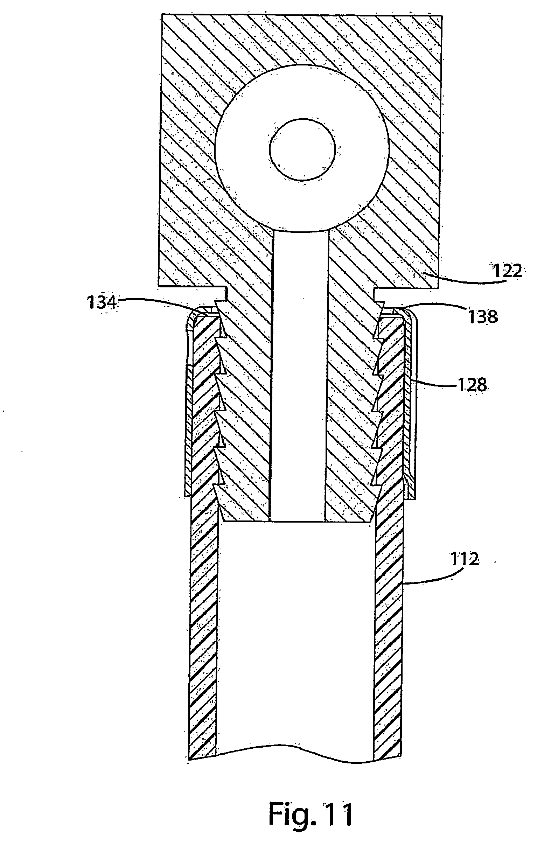

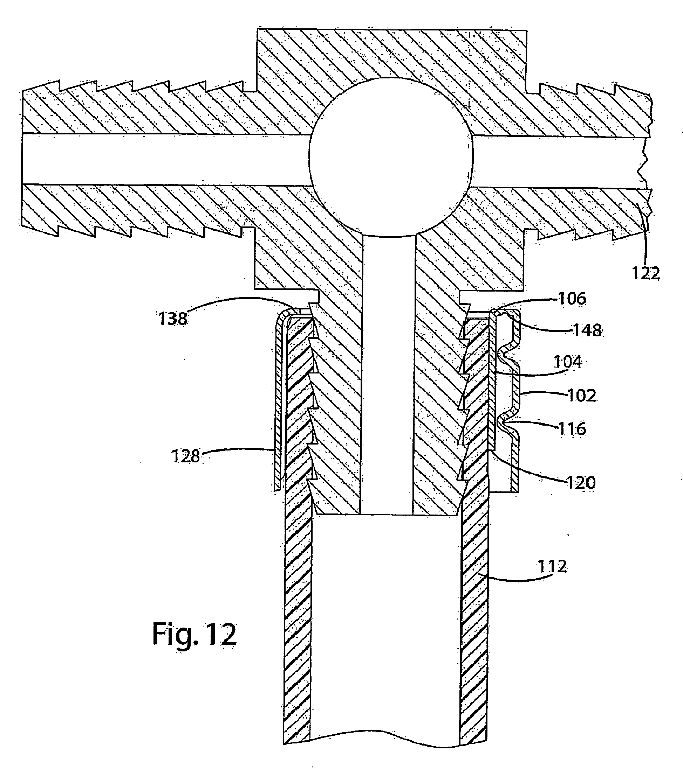

Figs. 8-15 show an embodiment of the present invention. In this embodiment the clamp 100 includes a crimping ear 102. The crimping ear 102 is generally a U-shaped section that extends radially outward from the ear 100. The ear 102 includes a mouth 105 that opens towards the center of the clamp 100 and the pipe 112. The mouth 105 forms a gap in the circumference of the cylindrical side wall 128 that can be drawn together to tighten the clamp 100 onto the pipe 112. A tongue 104 is disposed between the ear 102 and the pipe to overlie the mouth 105 of the ear 102. The tongue 104 is connected to the ear 102 with a strap 106. The clamp 100 of this embodiment preferably includes the lip 138 and ribs 114 of the previously disclosed embodiment, but they are not necessary.

The crimping ear 102 includes a pair of legs 108a-b extending radially outward from the side wall 128. The legs 108a-b each include a first end 110, and a second end 111. The first ends 110 extend from the side wall 128 in a direction radially outward from the side wall 128. The first ends 110 are spaced to define a gap in the side wall 128 that forms the mouth 105 of the ear 102. The second ends 11 are joined together by a base 115. The base 115 spans the gap between the two legs 108a-b and includes a top edge 107 and a bottom edge 109 that are generally flush with the first and second ends 124 and 126 of the side wall 128 respectively. The base 115 may further include one or more support ribs 116. The support ribs 116 are conventional, and as shown in Fig. 8 define a pair of relatively narrow parallel deformations 116 extending across the entire base 115 from the first leg 108a to the second leg 108b.

The tongue 104 is generally a plate that is positioned underneath the ear 102 between the ear 102 and the pipe 112. The tongue 104 overlies the mouth 105 of the ear 102 and can engage the pipe 112. The tongue 104 may be curved so that it corresponds to the curvature, of the side wall 128 and, the tongue 104 includes an inner surface 129 that is shaped to engage the pipe 112. As shown, the tongue 104 includes a top edge 118 proximate the first side 124 of the side wall 128 and a bottom edge 120 that extends inside the clamp 100 towards the second end 126 of the side wall 128. The tongue further includes first and second side edges 130 and 132. The distance between the side edges 130 and 132 is slightly wider than the gap between the legs 108a-b so that the tongue 104 is slightly wider than the mouth 105 of the ear 102. As shown, the side wall 128 may include an outward deformation 134 to accommodate for the tongue 104 and allow the tongue 104 to be in line with the side wall 128 to complete the circumference of the clamp 100. The deformation 134 may be wider than the distance between the side edges 130 and 132 of the tongue 104, forming gaps 139 and 140 between the side edges 130, 132 and the deformation 134 opposite sides of the tongue 104.

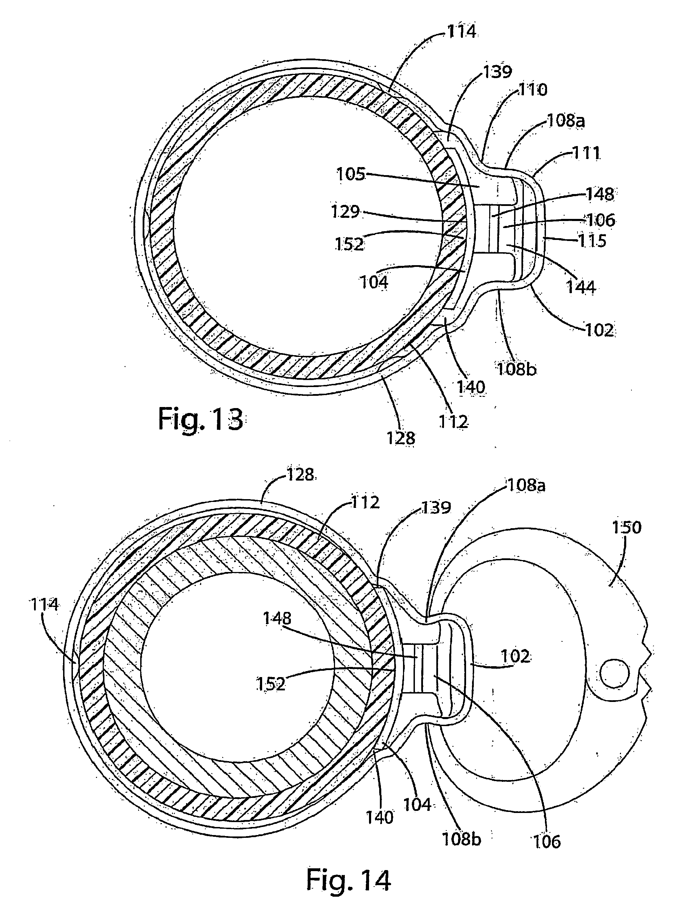

As shown in Figs. 13-15 the tongue 104 may be attached to the clamp 100 by a strap 106. The strap 106 is generally attached between the top edge 107 of the ear 102 and the top edge 118 of the tongue 104. Alternatively, the strap 106 maybe attached between the bottom edge 120 of the tongue 104 and the bottom edge 109 of the ear 102, or to a variety of other locations on the tongue 104 and the clamp 100. As disclosed, the strap 106 includes a lower surface 144 and an upper surface 146. The strap 106 may include one or more score lines 148 or similar deformations that allow the strap 106 to deform when the legs 108a-b ear 102 are crimped together. As shown, the score line 148 is located on the lower surface 144 of the strap 106 near the center of the strap 106, however, it may be placed at a variety of locations on the strap 106.

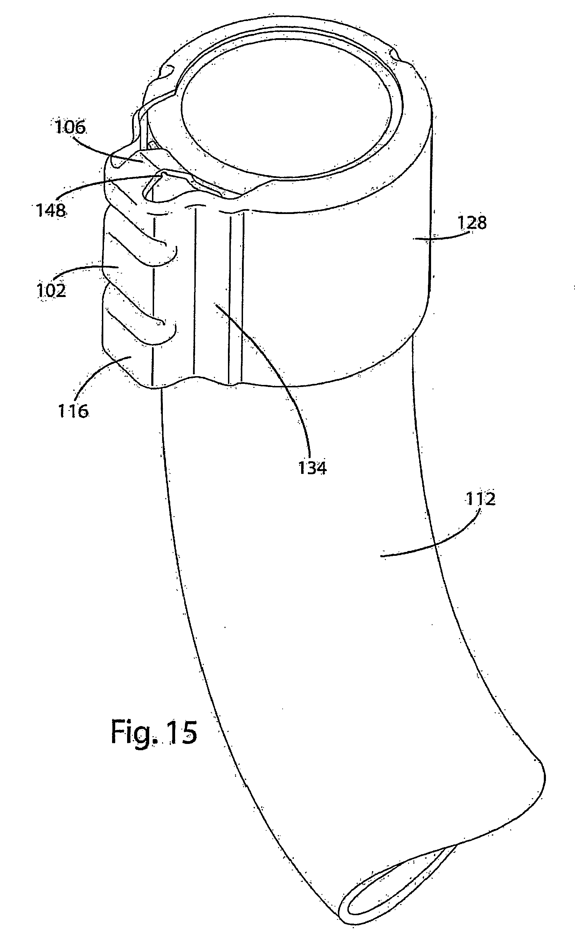

In operation, the clamp 100 is placed over the pipe 112 in the same manner as disclosed in the first embodiment. If the clamp 100 includes a lip 138 and/or ribs 114, the clamp 100 is positioned so that the end 123 of the pipe engages the lip 138. The ribs 114 form a friction fit with the outer wall 119 of the pipe 112. The inner surface 129 of the tongue 104 is positioned against or near the outer wall 119 of the pipe 112. Once the clamp 100 is properly positioned, a fitting 122 is inserted into the pipe 112, and the clamp 100 is crimped by pressing the legs 108a-b of the ear 102 towards each other - usually with a crimping tool 150 - to close the mouth 105 of the ear and pull the clamp 100 tight about the pipe 112 and fitting 122. The gapes 139 and 140 are narrowed when the ear 102 is crimped so that approximately the entire circumference off the pipe 112 is compressed, including the area 152 underneath the ear 102, which is compressed with the inner surface 129 of the tongue 104. Additionally, as shown in Fig. 15, the strap 106 may deform in the area of the score lines 148 as the ear 102 is crimped so that the strap 106 bows outwards (i.e. away from the rest of the clamp 100). In order to remove the clamp 100 for any reason, the strap 106, may be cut with a metal cutter and the tongue 104 may be pulled from inside the clamp 100. This relieves some of the compression of the clamp 100, allowing the clamp 100 to be pulled from the pipe.

## Claims

1. A one-piece unitary compression clamp (100) comprising:
a generally cylindrical wall (128);
a crimping ear (102) extending from said cylindrical wall, said ear defining a gap in said cylindrical wall, said crimping ear including a pair of legs (108a-b) extending radially outwardly from said cylindrical wall and a base (115) spanning said gap and joining said legs ;
a tongue (104) having an end connected to said crimping ear, said tongue overlying substantially all of said gap; said clamp **characterised in that** it further comprises:
a strap (106) attached between said end of said tongue and said crimping ear base, said strap including a deformable score line.

2. The compression clamp of claim 1 wherein said cylindrical wall has opposite longitudinal ends, a shoulder extending radially inwardly from one of said ends, and at least one inward deformation in said cylindrical wall, and wherein said inward deformation may comprise at least one longitudinal rib, and/or wherein said clamp may comprise a plurality of said deformations approximately evenly spaced about the circumference of said wall, and/or wherein said wall may define a hole proximate said one end proximate said shoulder.

## Patentansprüche

1. Einstückige unitare Druckklemme (100) mit :
einer im allgemeinen zylindrischen Wand (128);
einer Crimp-Ose (102), die sich von der zylindrischen Wand weg erstreckt, wobei die Crimp-Ose einen Spalt in der zylindrischen Wand festlegt und ein Paar Schenkel (108a-b), die sich von der zylindrischen Wand radial nach außen erstrecken, sowie eine Basis (115) aufweist, die den Spalt üuberspannt und die Schenkel miteinander verbindet;
einer Zunge (104) mit einem mit der Crimp-Ose verbundenen Ende, wobei die Zunge im Wesentlichen den gesamten Spalt überlagert; welche Klemme **dadurch gekennzeichnet ist, dass** sie weiters
einen Bugel (106) aufweist, der zwischen dem Ende der Zunge und der Basis der Crimp-Ose angebracht ist und eine verformbare Kerblinie aufweist.

2. Druckklemme nach Anspruch 1, wobei die zylindrische Wand gegenuberliegende Längsenden, eine sich von einem der Enden radial nach innen erstreckende Schulter und mindestens eine nach innen gerichtete Verformung in der zylindrischen Wand aufweist, und wobei die nach innen gerichtete Verformung mindestens eine Längsrippe aufweisen kann und/oder die Klemme eine Mehrzahl solcher Verformungen in einem annähernd gleichmäßigen Abstand um den Umfang der Wand herum aufweisen kann und/oder die Wand ein Loch nächst dem einen Ende nächst der Schulter festlegen kann.

## Revendications

1. Collier de compression (100) unitaire d'une seule pièce comprenant :
une paroi généralement cylindrique (128) ;
une oreille à sertir (102) s'étendant depuis ladite paroi cylindrique, ladite oreille définissant une fente dans ladite paroi cylindrique, ladite oreille à sertir contenant une paire de jambes (108a-b) s'étendant radialement vers l'extérieur depuis ladite paroi cylindrique et une base (115) couvrant ladite fente et joignant lesdites jambes ;
une languette (104) ayant une extrémité reliée à ladite oreille à sertir, ladite languette recouvrant essentiellement l'ensemble de ladite fente ; **caractérisé en ce qu'**il comprend en outre :
une bride (106) fixée entre ladite extrémité de ladite languette et ladite base d'oreille à sertir, ladite bride comprenant une ligne de repère déformable.

2. Collier de compression selon la revendication 1, dans lequel ladite paroi cylindrique a des extrémités longitudinales opposées, un épaulement s'étendant radialement vers l'intérieur depuis l'une desdites extrémités, et au moins une déformation vers l'intérieur dans ladite paroi cylindrique et dans lequel ladite déformation vers l'intérieur peut comprendre au moins une nervure longitudinale et/ou dans lequel ledit collier peut comprendre une pluralité de dites déformations espacées approximativement régulièrement autour de la circonférence de ladite paroi, et/ou dans lequel ladite paroi peut définir un trou à proximité d'une dite extrémité à proximité dudit épaulement.
